# EUROPÄISCHE PATENTSCHRIFT

(11) **EP 2 411 635 B1**
(45) Veröffentlichungstag und Bekanntmachung des Hinweises auf die Patenterteilung: **07.01.2015**
(21) Anmeldenummer: 10704766.4
(22) Anmeldetag: 19.02.2010
(51) Int. Cl.: F01N 3/20, F01N 11/00

(54) **VERFAHREN ZUM BETREIBEN EINES REDUKTIONSMITTELVERSORGUNGSSYSTEMS**
METHOD FOR OPERATING A REDUCING AGENT SUPPLY SYSTEM
PROCEDE POUR FAIRE FONCTIONNER UN SYSTEME D'ALIMENTATION EN AGENT DE REDUCTION

(30) Priorität: 25.03.2009 DE 102009014831
(43) Veröffentlichungstag der Anmeldung: 01.02.2012
(73) Patentinhaber: Daimler AG, 70327 Stuttgart (DE)
(72) Erfinder: HOCHHOLZNER, Michael, 73760 Nellingen (DE); BAIER, Horst, 71686 Remseck (DE); WANDEL, Ralf, 72149 Neustetten (DE)
(74) Vertreter: JENSEN & SON
(86) Internationale Anmeldenummer: PCT/EP2010/001046
(87) Internationale Veröffentlichungsnummer: WO 2010/108575

(56) Entgegenhaltungen:
- EP-A1- 1 655 463
- EP-A1- 1 811 147
- DE-A1-102005 060 127
- DE-A1-102006 007 658

## Beschreibung

Die Erfindung betrifft ein Verfahren zum Betreiben eines Reduktionsmittelversorgungssystems nach dem Oberbegriff des Anspruchs 1.

Zur Reduzierung von Stickoxiden im Abgas von Brennkraftmaschinen, insbesondere von Kraftfahrzeug-Dieselmotoren, ist es bekannt, wässrige Harnstofflösung dem Abgas zuzugeben. Im heißen Abgas erfolgt eine Freisetzung von Ammoniak, welcher als eigentliches, selektiv wirkendes Reduktionsmittel Stickoxide durch Reduktion an einem so genannten SCR-Katalysator unschädlich macht. Die Harnstofflösung wird dabei vielfach, mittels Druckluftunterstützung, als Aerosol zerstäubt dem Abgas zugeführt. Ein Problem derartiger Verfahren besteht darin, dass durch Ablagerungen von Harnstoff in dem entsprechenden Reduktionsmittelversorgungssystem Funktionsstörungen verursacht werden können. Zur deren Behebung und zur Reinigung des Reduktionsmittelversorgungssystems wird in der DE 10 2006 007 658 A1 vorgeschlagen, zusätzlich zur eingesetzten Luft und zur eingesetzten Harnstofflösung ein drittes Medium, vorzugsweise ein Lösungsmittel für Harnstoff, bereitzustellen und zum Ausspülen von Harnstoffablagerungen zu verwenden. Das Bereitstellen des dritten Mediums ist jedoch mit einem meist unerwünschten Aufwand verbunden.

Aufgabe der vorliegenden Erfindung ist es, ein Verfahren zum Betreiben eines Reduktionsmittelversorgungssystems anzugeben, welches eine vereinfachte Reinigung des Reduktionsmittelversorgungssystems ermöglicht.

Diese Aufgabe wird durch ein Verfahren mit den Merkmalen des Anspruchs 1 gelöst.

Das erfindungsgemäße Verfahren zeichnet sich dadurch aus, dass bei einem normalen Dosierbetrieb des Reduktionsmittelversorgungssystems ein wenigstens annähernd kontinuierlicher Luftstrom und ein gepulster Reduktionsmittelstrom erzeugt und wenigstens teilweise über die Düseneinrichtung in die Abgasleitung abgegeben werden, und bei einem Reinigungsbetrieb zur Reinigung des Reduktionsmittelversorgungssystems ein aus einer Anzahl von Luftstrompulsen gebildeter Luftstrom und ein aus einer Anzahl von Reduktionsmittelstrompulsen gebildeter Reduktionsmittelstrom erzeugt und der Düseneinrichtung zugeführt werden. Unter einem Luftstrom- bzw. Reduktionsmittelstrompuls ist dabei eine schlagartige und erhebliche Veränderung des Luftdurchsatzes bzw. des Reduktionsmitteldurchsatzes zu verstehen. Insbesondere besteht ein Luftstrom- bzw. Reduktionsmittelstrompuls in einem kurzzeitigen Einschalten eine Luftstroms bzw. eines Reduktionsmittelstroms derart, dass der Luftstrom bzw. der Reduktionsmittelstrom schlagartig von einem ausgeschalteten Zustand in einen eingeschalteten Zustand und sodann wieder in den ausgeschalteten Zustand wechselt. Die Dauer eines Pulses liegt bevorzugt im Bereich von einer bis etwa zwanzig Sekunden.

Obschon das Verfahren für den Betrieb von Versorgungssystemen für unterschiedliche, insbesondere flüssiger Reduktionsmittel, wie beispielsweise Mineralöl, Alkohol, Kohlenwasserstoffe und dergleichen geeignet ist, ist ein Einsatz bei Versorgungssystemen zur Versorgung einer Abgasnachhandlungseinrichtung mit wässriger Harnstofflösung (HWL) besonders vorteilhaft und bevorzugt.

Bei Verwendung von HWL als Reduktionsmittel werden bei normalem Dosierbetrieb zeitlich voneinander abgesetzte Pulse von HWL dem annähernd kontinuierlichen Luftstrom vorzugsweise derart zugeführt, dass eine aerosolartige Mischung von feinen HWL-Flüssigkeitströpfchen und Luft gebildet wird. Die Zufuhr des HWL-Stroms zur Luft kann am Ort der Düseneinrichtung, etwa nahe der Austrittsöffnung erfolgen. Insbesondere in diesem Fall kann ein Teil des HWL-Stroms von der Düseneinrichtung wieder zu einem Vorratsbehältnis für HWL zurückgeführt werden, so dass nur ein Teil des HWL-Stroms ins Abgas abgegeben wird. Bevorzugt erfolgt jedoch eine Zufuhr eines gepulsten HWL-Stroms in den wenigstens annähernd kontinuierlichen Luftstrom an einer von der Düseneinrichtung entfernten Stelle und die Mischung wird über eine Gemischleitung der in die Abgasleitung öffnenden Düseneinrichtung zugeführt und dem Abgasstrom zugesetzt. Die HWL-Pulse sind dabei vorzugsweise bedarfsgerecht so bemessen, dass insgesamt ein angestrebter NOx-Umsatz in einem NOx-Reduktionskatalysator der Abgasnachhandlungseinrichtung wenigstens annähernd erzielt wird. Die Erzeugung und Zumessung des gepulsten HWL-Stroms erfolgt bevorzugt durch einen pulsweitenmodulierten Betrieb eines Dosierventils. Der Luftstrom wird vorzugsweise von einer Druckluftversorgungseinheit geliefert.

Wird ein Bedarf für eine Reinigung des Reduktionsmittelversorgungssystems festgestellt, so wird, bevorzugt nach positiv verlaufener Abprüfung vorgegebener Freigabebedingungen, ein Reinigungsbetrieb aktiviert. Im Reinigungsbetrieb werden sowohl Luftstrompulse, als auch HWL-Strompulse erzeugt und der Düseneinrichtung zugeführt. Infolge der daraus resultierenden stoßweisen Einwirkung von Luft, HWL und/oder HWL-Luftmischung auf gegebenenfalls im Reduktionsmittelversorgungssystem vorhandene Ablagerungen, ist deren wirksame Entfernung und Austreibung aus dem Reduktionsmittelversorgungssystem ermöglicht. Selbstverständlich kann auch vorgesehen sein, den Reinigungsbetrieb präventiv zu vorgebbaren Zeitpunkten, etwa bei jeder zweiten, jeder fünften, allgemein jeder n-ten Inbetriebnahme des Reduktionsmittelversorgungssystems zu aktivieren.

In Ausgestaltung des Verfahrens wird ein Staudruck in einer Leitung des Reduktionsmittelversorgungssystems zum Transport des Luftstroms zur Düseneinrichtung ermittelt und der Reinigungsbetrieb wird bei Überschreiten eines vorgebbaren insbesondere ersten oberen Druckschwellenwerts aktiviert. Durch eine bevorzugt kontinuierliche Drucküberwachung ist eine zuverlässige Überwachung des Reduktionsmittelversorgungssystems insbesondere in Bezug auf Ablagerungen und andere, im Leitungssystem querschnittsverengend wirkende Verunreinigungen ermöglicht. Beispielsweise führen korrosionsbedingte Ablagerungen oder auch Harnstoffablagerungen im luftdurchströmten Leitungssystem des Reduktionsmittelversorgungssystems zu einem erhöhten Strömungswiderstand. Bei einem bevorzugt eingesetzten Luftstrom bekannter bzw. vorgebbarer Größe resultiert daraus ein messbarer Druckanstieg. Durch Überwachung des Staudrucks an einer vorgegebenen geeigneten Stelle des Leitungssystems, bevorzugt in einer von Luft und/oder von HWL-Luftgemisch durchströmbaren Leitung, ist somit zuverlässig ermittelbar, ob ein Bedarf für eine Reinigung des Reduktionsmittelversorgungssystems besteht. Wird ein unzulässiger Anstieg des Staudrucks ermittelt, so wird der Reinigungsbetrieb aktiviert.

Analog wird in weiterer Ausgestaltung des Verfahrens ein Staudruck in einer Leitung des Reduktionsmittelversorgungssystems zum Transport des Luftstroms zur Düseneinrichtung ermittelt und ein aktivierter Reinigungsbetrieb wird bei Unterschreiten eines vorgebbaren unteren Druckschwellenwerts deaktiviert. Infolge der erfindungsgemäß vorgesehenen Drucküberwachung bei laufendem Reinigungsbetrieb kann zuverlässig ermittelt werden, ob und zu welchem Zeitpunkt der Reinigungsbetrieb in gewünschtem Umfang Erfolg hat. Dieser äußert sich typischerweise in einem durch Entfernung von Ablagerungen bewirkten verringerten Strömungswiderstand, welcher durch eine Druckmessung erkannt wird. Der Reinigungsbetrieb wird daraufhin deaktiviert und gegebenenfalls zum normalen Dosierbetrieb zurückgekehrt oder dieser aktiviert. Der normale Dosierbetrieb wird somit lediglich solange wie unbedingt nötig unterbrochen und ein unnötig langes Aufrechterhalten des Reinigungsbetriebs vermieden.

In einer weiteren vorteilhaften Ausgestaltung des Verfahrens wird ein aktivierter Reinigungsbetrieb nach Überschreiten eines vorgebbaren Reduktionsmittelmengengesamtwerts des aus Reduktionsmittelstrompulsen gebildeten Reduktionsmittelstroms oder nach Überschreiten einer vorgebbaren Zeitdauer ab Beginn des Reinigungsbetriebs deaktiviert. Dies ist insbesondere, aber nicht nur bei einer präventiv vorgenommenen Aktivierung des Reinigungsbetriebs vorteilhaft, da reinigungswirksame Reduktionsmittelgesamtmengen bzw. Zeitdauern des Reinigungsbetriebs vorab ermittelt und somit optimal festgelegt werden können.

In weiterer Ausgestaltung des Verfahrens ist für den Reinigungsbetrieb eine insbesondere erste Betriebsart vorgesehen, bei welcher eine Folge von Reduktionsmittelstrompulsen und Luftstrompulsen derart erzeugt wird, dass ein jeweiliger Reduktionsmittelstrompuls mit einem jeweiligen Luftstrompuls zeitlich überlappt. Dies ermöglicht, dass im Reinigungsbetrieb zeitweise nur Luft oder nur flüssiges Reduktionsmittel und zeitweise eine Reduktionsmittel-Luftmischung durch wenigstens Teile des Leitungssystems des Reduktionsmittelversorgungssystems und/oder der Düseneinrichtung gefördert werden. Dies hat sich als ganz besonders reinigungswirksam im Hinblick auf eine Entfernung von Ablagerungen erwiesen. Dabei ist es vorteilhaft, wenn in weiterer Ausgestaltung des Verfahrens eine ansteigende und/oder eine abfallende Flanke eines Reduktionsmittelstrompulses zeitlich in einen Luftstrompuls fällt.

In einer weiteren vorteilhaften Ausgestaltung des Verfahrens fällt ein Luftstrompuls zeitlich vollständig in einen Reduktionsmittelstrompuls. Somit wird nach eine Förderpause mit durchströmungsfreiem Betrieb zunächst der Reduktionsmittelstrom, bevorzugt schlagartig, etwa durch Öffnen eines Absperrventils eingeschaltet. Nach Verstreichen einer insbesondere kurzen Zeitspanne wird der Luftstrom zugeschaltet und danach bei weiterhin bestehendem Reduktionsmittelstrom wieder abgeschaltet. Nach einer weiteren insbesondere kurzen Zeitspanne, vorzugsweise im Bereich von einer bis wenigen Sekunden wird auch der Reduktionsmittelstrom wieder abgeschaltet. Dadurch werden kurze Spülphasen mit einem Durchspülen des Leitungssystems mit flüssigem Reduktionsmittel erzeugt, die einer Durchströmung mit Reduktionsmittel-Luft-Aerosolgemisch vor- und nachgeschaltet sind. Dies hat sich ebenfalls als sehr wirkungsvoll in Bezug auf ein Lösen von Ablagerungen erwiesen.

In weiterer Ausgestaltung des Verfahrens ist für den Reinigungsbetrieb eine insbesondere zweite Betriebsart vorgesehen, bei welcher bei abgeschaltetem Luftstrom eine Anzahl von aufeinander folgenden Reduktionsmittelstrompulsen und bei abgeschaltetem Reduktionsmittelstrom eine Anzahl von aufeinander folgenden Luftstrompulsen erzeugt wird. Diese Vorgehensweise hat sich insbesondere hinsichtlich einer Entfernung von besonders stark haftenden Ablagerungen als besonders wirkungsvoll erwiesen. Diese werden hauptsächlich nach einem längeren Stillstand des Reduktionsmittelversorgungssystems, etwa infolge eines Fahrzeugstillstands über mehrere Stunden oder Tage, beobachtet. Es kann daher vorgesehen sein, die zweite Betriebsart generell nach einer vorgebbaren Stillstandsdauer mit Wiederinbetriebnahme des Reduktionsmittelversorgungssystems zu aktivieren.

Insbesondere im Hinblick auf eine Entfernung besonders stark haftender Verschmutzungen ist es vorteilhaft, wenn in weiterer Ausgestaltung der Erfindung ein Staudruck in einer Leitung des Reduktionsmittelversorgungssystems zum Transport des Luftstroms zur Düseneinrichtung ermittelt wird und die erste Betriebsart des Reinigungsbetriebs bei Überschreiten eines vorgebbaren ersten oberen Druckschwellenwerts aktiviert wird und die zweite Betriebsart des Reinigungsbetriebs bei Überschreiten eines vorgebbaren zweiten oberen Druckschwellenwerts aktiviert wird, wobei der zweite obere Druckschwellenwert höher als der erste obere Druckschwellenwert ist. Dabei ist es besonders vorteilhaft, wenn in weiterer Ausgestaltung der Erfindung auf einen Reinigungsbetrieb der zweiten Betriebsart ein Reinigungsbetrieb der ersten Betriebsart folgt. Vorzugsweise wird unmittelbar nach Deaktivieren der zweiten Betriebsart die erste Betriebsart aktiviert.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig.1: eine schematische Darstellung einer vorteilhaften Ausführungsform eines Reduktionsmittelversorgungssystems,
- Fig. 2: ein schematisiertes Zeitdiagramm für eine Pulsfolge von Luftstrompulsen und Reduktionsmittelstrompulsen zur Verdeutlichung einer vorteilhaften Variante des erfindungsgemäßen Verfahrens entsprechend einer ersten Reinigungsbetriebsart und
- Fig. 3: ein schematisiertes Zeitdiagramm für eine Pulsfolge von Luftstrompulsen und Reduktionsmittelstrompulsen zur Verdeutlichung einer vorteilhaften Variante des erfindungsgemäßen Verfahrens entsprechend einer zweiten Reinigungsbetriebsart

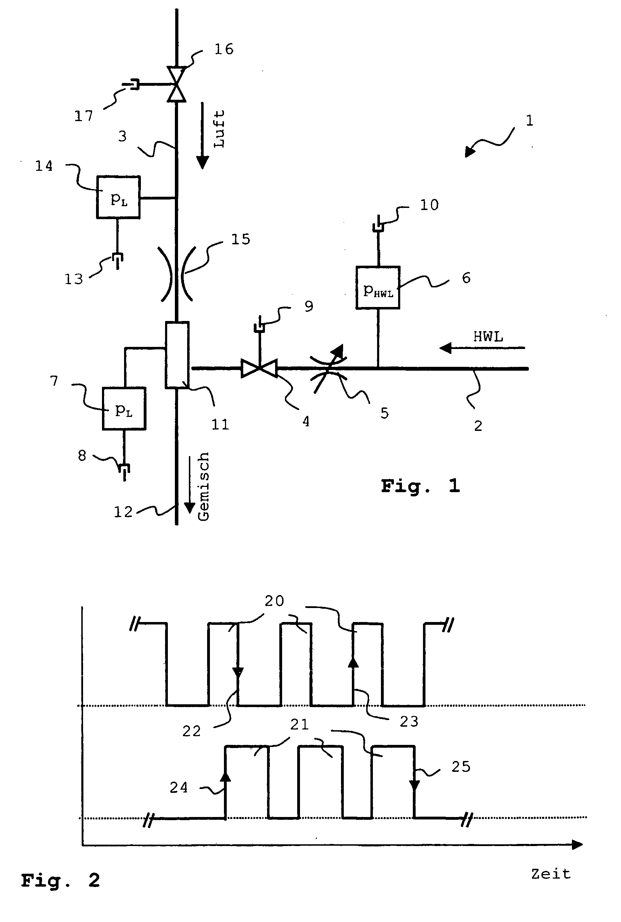

In der in Fig. 1 schematisch dargestellten vorteilhaften Ausführungsform umfasst ein hier betrachtetes Reduktionsmittelversorgungssystem 1 eine Flüssigkeitszufuhrleitung 2 für eine zu dosierende Flüssigkeit. In der Flüssigkeitszufuhrleitung 2 sind ein getaktet betätigbares Dosierventil 4 sowie eine einstellbare Justierdrossel 5 und ein erster Drucksensor 6 angeordnet. Die Flüssigkeitszufuhrleitung 2 mündet ebenso wie eine Luftzufuhrleitung 3 zur Zufuhr von Druckluft in einen Mischbereich 11 des Reduktionsmittelversorgungssystems 1. Im Mischbereich 11 erfolgt eine innige Vermischung von zugeführter Druckluft und Flüssigkeit derart, dass eine aerosolartige Mischung mit möglichst kleinen Flüssigkeitströpfchen erzeugt wird. Der Mischbereich 11 kann als separate Mischkammer oder als integraler Bestandteil der Flüssigkeitszufuhrleitung 2 oder der Luftzufuhrleitung 3 ausgebildet sein.

Nachfolgend wird davon ausgegangen, dass es sich bei der Flüssigkeit um eine wässrige Harnstofflösung (HWL) handelt, welche in eine Abgasleitung eines Kraftfahrzeugs stromauf eines so genannten SCR-Katalysators zur Stickoxidentfernung in Form der aerosolartigen Mischung mittels einer Düseneinrichtung eingedüst werden kann, was im einzelnen nicht dargestellt ist. Das Reduktionsmittelversorgungssystem 1 ist jedoch nicht auf diese Anwendung beschränkt, sondern kann prinzipiell auch zur Dosierung eines beliebigen anderen flüssigen Zusatzstoffes eingesetzt werden.

Die Einspeisung von HWL in die Flüssigkeitszufuhrleitung 2 erfolgt vorzugsweise mittels einer Pumpe aus einem Vorratsbehälter, was im Einzelnen ebenfalls nicht dargestellt ist. Dabei wird durch die Pumpe ein Vordruck p_{HWL} in der Flüssigkeitszufuhrleitung 2 stromauf des Dosierventils 4 erzeugt und/oder aufrechterhalten, der vom ersten Drucksensor 6 erfasst wird. Das Dosierventil 4 ist vorzugsweise in der Art eines 2/2-Wege-Magnetventils ausgeführt. Es ist vorgesehen, dass das Dosierventil 4 derart betreibbar ist, dass es entweder geöffnet oder geschlossen ist, wozu es entsprechend angesteuert wird.

Die Justierdrossel 5 dient der Einstellung eines günstigen Arbeitspunktes hinsichtlich des Flüssigkeitsdurchsatzes durch das geöffnete Dosierventil 4 bei den vorherrschenden Druckverhältnissen. Vorzugsweise ist die Justierdrossel 5 wie in Fig. 1 dargestellt stromauf des Dosierventils 4 und stromab des ersten Drucksensors 6 in der Flüssigkeitszufuhrleitung 2 angeordnet. Eine Anordnung an einer anderen Stelle der Flüssigkeitszufuhrleitung 2, insbesondere stromauf des Mischbereichs 11, ist ebenfalls möglich.

Bei geöffnetem Dosierventil 4 strömt HWL durch dieses hindurch und vermischt sich mit der zugeführten Druckluft im Mischbereich 11 bzw. wird infolge der Druckluftzufuhr im Mischbereich 11 vernebelt. Es ist vorgesehen, dass bei normalem Dosierbetrieb des Reduktionsmittelversorgungssystems 1 ständig, also auch bei geschlossenem Dosierventil 4, Druckluft gefördert wird. Insbesondere ist vorgesehen, dass bei einer Inbetriebnahme des Reduktionsmittelversorgungssystems 1 mit einer Zumessung von HWL erst begonnen wird, wenn ein hinreichender Luftdurchsatz vorhanden ist. Zur Druckluftversorgung wird vorzugsweise auf einen nicht dargestellten Druckluftspeicher oder einen Kompressor zurückgegriffen. Vorzugsweise wird ein vorgegebener Luftdruck beispielsweise über einen ebenfalls nicht dargestellten Druckminderer eingestellt. Mittels eines vorzugsweise nachgeschalteten ansteuerbaren Schaltelements 16 kann die Luftzufuhr eingangsseitig der Luftzufuhrleitung 3 wahlweise abgesperrt oder freigegeben werden.

Der Massendurchsatz von HWL durch das geöffnete Dosierventil 4 ist hauptsächlich vom über dem Dosierventil 4 vorhandenen Differenzdruck Δp abhängig. Selbst bei einem konstanten Vordruck p_{HWL} in der Flüssigkeitszufuhrleitung 2 können sich jedoch Schwankungen des Differenzdrucks Δp infolge eines schwankenden Dosierdrucks p_{L} stromab des Dosierventils 4 ergeben. Letztere werden hauptsächlich von in Abhängigkeit vom Motorbetrieb schwankenden Druckverhältnissen in der Abgasanlage verursacht, welche in die Flüssigkeitszufuhrleitung 2 bis zur Ausgangsseite des Dosierventils 4 zurückwirken können. Es ist daher vorgesehen, mittels eines zweiten Drucksensors 7 den Dosierdruck p_{L} stromab des Dosierventils 4, vorzugsweise im Mischbereich 11 zu erfassen und so laufend den aktuellen Differenzdruck Δp zu ermitteln. Eine Anordnung für den zweiten Drucksensor 7 an einer anderen Stelle stromab des Dosierventils 4 ist ebenfalls möglich.

Zur Verhinderung einer Rückströmung von HWL in die Luftzufuhrleitung 3 ist eingangsseitig des Mischbereichs 11 in der Luftzufuhrleitung 3 ein Trennelement 15 angeordnet. Vorzugsweise bildet das Trennelement 15 den endseitigen Abschnitt der Luftzufuhrleitung 3 und mündet in den Mischbereich 11 aus. Obschon das Trennelement 15 beispielsweise auch in der Art eines Rückschlagventils ausgeführt sein kann, ist es bevorzugt, dass das Trennelement 15 als Düse, insbesondere als so genannte überkritische Düse ausgebildet ist, mit welcher sich eine Luftströmung mit Überschallgeschwindigkeit erreichen lässt. Auf diese Weise wird ein Eindringen von HWL in die Luftzufuhrleitung 3 weitgehend vermieden. Ferner ist eine starke Verwirbelung im Mischbereich 11 ermöglicht. Durch die mit hoher Geschwindigkeit in den Mischbereich 11 einströmende Luft wird in den Mischbereich 11 zugeführte HWL fein vermischt bzw. vernebelt, und es wird eine aerosolartige Mischung erzeugt. Darüber hinaus ermöglicht die Ausführung des Trennelements 15 als überkritische Düse eine Vergleichmäßigung der Luftströmung. Zur Unterstützung einer gleichmäßigen Luftströmung ist es außerdem vorgesehen, einen möglichst konstanten Luftdruck eingangsseitig der Luftzufuhrleitung 3 bzw. stromauf des Trennelements 15 einzustellen. Vorteilhaft ist ein Überdruck von ca. 5 bar. Vorzugsweise ist wie dargestellt stromauf des Trennelements 15 ein dritter Drucksensor 14 an die Luftzufuhrleitung 3 angeschlossen, so dass der stromauf des Trennelements 15 vorhandene Luftdruck ebenfalls überwacht werden kann.

Der zweite Drucksensor 7 ermöglicht einerseits zusammen mit dem ersten Drucksensor 6 eine Ermittlung des über der Serienschaltung von Justierdrossel 5 und Dosierventil 4 vorhandenen Differenzdrucks Δp und andererseits im Zusammenhang mit dem dritten Drucksensor 14 eine Ermittlung des über dem Trennelement 11 abfallenden Differenzdrucks. Letzterer kann jedoch auch unter Verzicht des dritten Drucksensors 14 durch Berücksichtigung eines voreingestellten Luftdrucks ermittelt werden. Infolge der Drucküberwachungen kann eine genaue Dosierung der Mischung bzw. der HWL erreicht werden.

Über eine Gemischleitung 12 wird die im Mischbereich 11 erzeugte Mischung der Düseneinrichtung bzw. der Abgasnachbehandlungseinrichtung zugeführt. Die Druckluft dient dabei als Transportmedium. Obschon normalerweise nicht bevorzugt, ist es möglich, anstelle der Druckluft auch ein anderes Transportmedium wie beispielsweise Stickstoff oder Abgas einzusetzen.

Zur Steuerung bzw. Regelung des Reduktionsmittelversorgungssystems 1 ist ein nicht dargestelltes Dosiersteuergerät vorgesehen, an welches die Drucksensoren 6, 7, 14 und das Dosierventil 4 über Schnittstellen 8, 9, 10, 13 angeschlossen sind. Das Dosiersteuergerät ist vorzugsweise in der Art eines Mikrocomputers mit Ein-/Ausgabeeinheit, Recheneinheit und Speichereinheit ausgeführt, um die zur Steuerung des Reduktionsmittelversorgungssystems 1 erhaltenen Daten und Messwerte verarbeiten zu können und entsprechende Steuersignale ermitteln und ausgeben zu können. Beispielsweise kann das Schaltelement 16 in der Luftzufuhrleitung 3 über eine weitere Schnittstelle 17 derart angesteuert werden, dass die Luftzufuhr wahlweise ein- und ausgeschaltet werden kann.

Infolge von Ablagerungen von Harnstoff oder von Korrosionsbestandteilen kann es im Leitungssystem oder auch in der Düseneinrichtung des Reduktionsmittelversorgungssystems 1 zu Verstopfungen kommen, welche einen ordnungsgemäßen Betrieb stören. Ablagerungen verursachen typischerweise eine Querschnittsverengung in einer betroffenen Leitung, welche sich durch einen erhöhten Staudruck bemerkbar macht. Festgestellt werden kann dies beispielsweise durch Auswertung eines oder mehrerer der von den Drucksensoren 6, 7, 14 gelieferten Druckwerte. Eine durch Verstopfung bzw. Ablagerung verursachte Störung kann jedoch auch durch Überwachung des Luft- und/oder HWL-Durchsatzes erfasst werden, welche im Störungsfall typischerweise unter die vorgesehenen Werte absinken. Nachfolgend wird lediglich beispielhaft davon ausgegangen, dass eine Verstopfung im oder stromab des Mischbereichs 11 vorhanden ist, was sich durch einen vom zweiten Drucksensor 7 detektierbaren Druckanstieg bei Förderung von Luft durch die Luftzufuhrleitung 3 bzw. die Gemischleitung 12 bemerkbar macht. Wird bei dem vorgesehenen Luftdurchsatz vom zweiten Drucksensor 7 ein auf einen ersten oberen Druckschwellenwert angestiegener Betriebsdruck festgestellt, so wird der normale Dosierbetrieb unterbrochen und ein Reinigungsbetrieb gestartet. Der Reinigungsbetrieb besteht darin, dass ein aus einer Anzahl von Luftstrompulsen gebildeter Luftstrom und ein aus einer Anzahl von HWL-Strompulsen gebildeter HWL-Strom erzeugt und der Düseneinrichtung zugeführt werden, was nachfolgend anhand von Fig. 2 näher erläutert wird.

Fig. 2 zeigt ein schematisiertes Zeitdiagramm für eine Pulsfolge von Luftstrompulsen 20 und HWL-Strompulsen 21 entsprechend einer ersten Reinigungsbetriebsart, die vorzugsweise dann aktiviert wird, wenn vom zweiten Drucksensor 7 ein auf einen ersten oberen Druckschwellenwert von beispielsweise 2,5 bar angestiegener Betriebsdruck festgestellt wird. Dabei wechselt sowohl der Luftstrom als auch HWL-Strom periodisch und zumindest annähernd sprunghaft von einem Aus-Zustand über einen Ein-Zustand wieder zurück in den Aus-Zustand, so dass annähernd Rechteckpulse vorgebbarer Länge bzw. vorgebbarer Periodendauer resultieren. Es ist besonders bevorzugt, wenn die Luftstrompulse 20 und die HWL-Strompulse 21 zeitlich überlappen. Insbesondere ist es bevorzugt, wenn eine ansteigende Flanke 24 eines HWL-Strompulses zeitlich in einen aktiven Luftstrompuls 20 fällt und eine abfallende Flanke 22 eines Luftstrompulses 20 in einen aktiven HWL-Strompuls 21 fällt. Entsprechend fällt vorliegend eine ansteigende Flanke 23 eines jeweiligen Luftstrompulses 20 in eine HWL-Strompuls-Pause und eine abfallende Flanke 25 eines HWL-Strompulses 21 in eine Luftstrompuls-Pause. Das Taktverhältnis von Luftstrompulsen 20 und HWL-Strompulsen 21 wird bevorzugt etwa gleich eins eingestellt. Die Luftstrompulse 20 und HWL-Strompulse 21 haben dabei eine Dauer von bevorzugt 1 s bis 10 s. Es kann vorgesehen sein, in einem jeweiligen HWL-Strompuls eine vorgebbare HWL-Menge von beispielsweise 50 ml zu fördern.

Infolge der pulsartigen Förderung von Luft und/oder HWL werden Ablagerungen wirksam abgelöst bzw. aufgelöst und über die Düseneinrichtung aus dem Reduktionsmittelversorgungssystems 1 ausgespült. Im Allgemeinen ist dafür eine Dauer des Reinigungsbetriebs in der skizzierten Art von etwa 0,5 min bis etwa 10 min ausreichend. Als Endekriterium für eine Beendigung des Reinigungsbetriebs dient entweder der Ablauf einer vorgebbaren Zeitdauer oder das Unterschreiten eines vorgebbaren unteren Druckschwellenwertes von beispielsweise etwa 1,9 bar, vorliegend gemessen mittels des zweiten Drucksensors 7. Danach kann wieder der normale Dosierbetrieb aufgenommen werden.

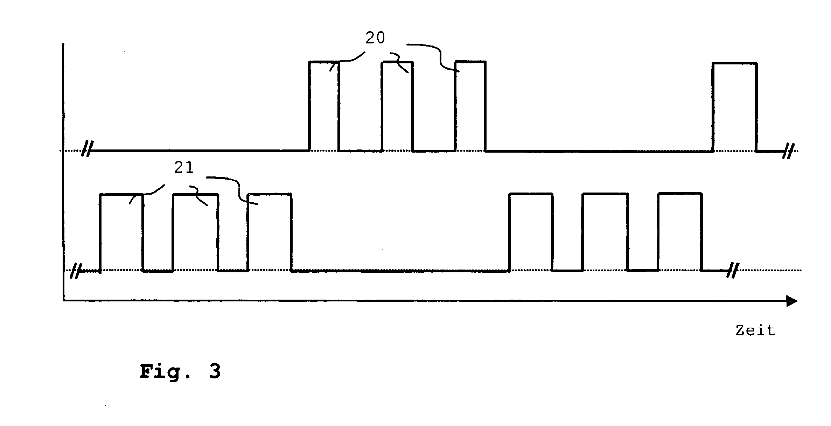

Insbesondere bei einer längeren Stillstandsphase kann es zur Bildung von vergleichsweise hartnäckig haftenden bzw. stärkeren Ablagerungen kommen. Dies macht sich typischerweise durch einen vergleichsweise starken Anstieg eines im Reduktionsmittelversorgungssystem 1 messbaren Staudrucks bemerkbar. Wird beispielsweise durch den zweiten Drucksensor 7 ein auf einen zweiten vorgebbaren Druckschwellenwert von etwa 3,5 bar angestiegener Betriebsdruck gemessen, so wird auf eine solche stärkere Verschmutzung geschlossen. In diesem Fall ist es erfindungsgemäß vorgesehen, einen Reinigungsbetrieb entsprechend einer zweiten Reinigungsbetriebsart zu aktivieren. Die dabei vorzugsweise vorgesehene Vorgehensweise wird nachfolgend anhand von Fig. 3 erläutert.

In Fig. 3 ist in einer zur Fig. 2 analogen Darstellung eine Pulsfolge von Luftstrompulsen 20 und HWL-Strompulsen 21 entsprechend der zweiten Reinigungsbetriebsart dargestellt. Bei dieser wechseln eine Anzahl von hintereinander ausgeführten HWL-Strompulsen 21 mit einer Anzahl von ebenfalls hintereinander ausgeführten Luftstrompulsen 20 derart ab, dass bei Pulsen der einen Art die Zufuhr des jeweils anderen Mediums abgestellt bleibt. Vorzugsweise wird mit der Erzeugung von HWL-Strompulsen 21 begonnen. Dadurch ist eine Aufweichung von Verkrustungen ermöglicht, welche durch die sich an die Folge von HWL-Strompulsen 21 anschließenden Luftstrompulsen (20) verbessert abgelöst werden können. Ein jeweiliges Paket von Pulsen kann aus einem bis etwa 10 Pulsen bestehen, wobei Tastverhältnis und Pulsdauer bevorzugt analog zur ersten Reinigungsbetriebsart eingestellt werden. Der Reinigungsbetrieb wird bevorzugt eine vorbestimmte Gesamtdauer aufrechterhalten. Es kann jedoch auch vorgesehen sein, den Reinigungsbetrieb bei Unterschreiten eines vorgebbaren unteren Druckschwellenwerts, gemessen bei aktiver Luftzufuhr, zu beenden. Ebenso kann vorgesehen sein, den Reinigungsbetrieb solange aufrechtzuerhalten, bis eine vorgebbare HWL-Menge in Pulsform gefördert wurde. Dadurch wird ein unerwünscht langer Reinigungsbetrieb vermieden.

Vorzugsweise ist vorgesehen, unmittelbar oder kurz nach Durchführung eines Reinigungsbetriebs entsprechend der zweiten Reinigungsbetriebsart einen Reinigungsbetrieb entsprechend der in Fig. 2 veranschaulichten ersten Reinigungsbetriebsart durchzuführen.

Da Ablagerungen zumeist verstärkt nach Betriebspausen auftreten, kann es vorgesehen sein, eine Inbetriebnahme des Reduktionsmittelversorgungssystems 1 grundsätzlich mit einem Reinigungsbetrieb entsprechend der ersten oder der zweiten Reinigungsbetriebsart zu beginnen. Alternativ oder zusätzlich kann vorgesehen sein, nach Beendigung eines normalen Dosierbetriebs generell präventiv einen Reinigungsbetrieb durchzuführen.

Dadurch wird Ablagerungen wirksam vorgebeugt und/oder Ablagerungen beseitigt, bevor diese mit unerwünschten Wirkungen in Erscheinung treten. Bei einer Außerbetriebnahme kann zur Entfernung von HWL-Resten aus dem Leitungssystem weiterhin eine Spülphase vorgesehen sein, in welcher eine vorgebbare Zeitspanne lediglich ein Luftstrom aufrechterhalten ist. Es kann auch vorgesehen sein, generell nur einen Reinigungsbetrieb ausschließlich entsprechend der oben erläuterten ersten oder der zweiten Reinigungsbetriebsart durchzuführen.

## Patentansprüche

1. Verfahren zum Betreiben eines Reduktionsmittelversorgungssystems zur Versorgung einer Abgasnachhandlungseinrichtung eines Kraftfahrzeugs mit einem der Abgasreinigung dienenden Reduktionsmittel, bei welchem ein Luftstrom und ein Reduktionsmittelstrom einer in eine Abgasleitung öffnenden Düseneinrichtung zugeführt werden,
**dadurch gekennzeichnet, dass**
- bei einem normalen Dosierbetrieb des Reduktionsmittelversorgungssystems (1) ein wenigstens annähernd kontinuierlicher Luftstrom und ein gepulster Reduktionsmittelstrom erzeugt und wenigstens teilweise über die Düseneinrichtung in die Abgasleitung abgegeben werden, und
- bei einem Reinigungsbetrieb zur Reinigung des Reduktionsmittelversorgungssystems (1) ein aus einer Anzahl von Luftstrompulsen (20) gebildeter Luftstrom und ein aus einer Anzahl von Reduktionsmittelstrompulsen (21) gebildeter Reduktionsmittelstrom erzeugt und der Düseneinrichtung zugeführt werden.

2. Verfahren nach Anspruch 1,
**dadurch gekennzeichnet, dass**
ein Staudruck in einer Leitung des Reduktionsmittelversorgungssystems (1) zum Transport des Luftstroms zur Düseneinrichtung ermittelt wird und der Reinigungsbetrieb bei Überschreiten eines vorgebbaren insbesondere ersten oberen Druckschwellenwerts aktiviert wird.

3. Verfahren nach Anspruch 1 oder 2,
**dadurch gekennzeichnet, dass**
ein Staudruck in einer Leitung des Reduktionsmittelversorgungssystems (1) zum Transport des Luftstroms zur Düseneinrichtung ermittelt wird und ein aktivierter Reinigungsbetrieb bei Unterschreiten eines vorgebbaren unteren Druckschwellenwerts deaktiviert wird.

4. Verfahren nach Anspruch 1 oder 2,
**dadurch gekennzeichnet, dass**
ein aktivierter Reinigungsbetrieb nach Überschreiten eines vorgebbaren Reduktionsmittelmengengesamtwerts des aus Reduktionsmittelstrompulsen (21) gebildeten Reduktionsmittelstroms oder nach Überschreiten einer vorgebbaren Zeitdauer ab Beginn des Reinigungsbetriebs deaktiviert wird.

5. Verfahren nach einem der Ansprüche 1 bis 4,
**dadurch gekennzeichnet, dass**
für den Reinigungsbetrieb eine insbesondere erste Betriebsart vorgesehen ist, bei welcher eine Folge von Reduktionsmittelstrompulsen (21) und Luftstrompulsen (20) derart erzeugt wird, dass ein jeweiliger Reduktionsmittelstrompuls (21) mit einem jeweiligen Luftstrompuls (20) zeitlich überlappt.

6. Verfahren nach Anspruch 5,
**dadurch gekennzeichnet, dass**
eine ansteigende und/oder eine abfallende Flanke (24; 25) eines Reduktionsmittelstrompulses (21) zeitlich in einen Luftstrompuls (20) fällt.

7. Verfahren nach Anspruch 5,
**dadurch gekennzeichnet, dass**
ein Luftstrompuls (20) zeitlich vollständig in einen Reduktionsmittelstrompuls (21) fällt.

8. Verfahren nach einem der Ansprüche 1 bis 7,
**dadurch gekennzeichnet, dass**
für den Reinigungsbetrieb eine insbesondere zweite Betriebsart vorgesehen ist, bei welcher bei abgeschaltetem Luftstrom eine Anzahl von aufeinander folgenden Reduktionsmittelstrompulsen (21) und bei abgeschaltetem Reduktionsmittelstrom eine Anzahl von aufeinander folgenden Luftstrompulsen (20) erzeugt wird.

9. Verfahren nach Anspruch 8 und einem oder mehreren der Ansprüche 5 bis 7,
**dadurch gekennzeichnet, dass**
ein Staudruck in einer Leitung des Reduktionsmittelversorgungssystems (1) zum Transport des Luftstroms zur Düseneinrichtung ermittelt wird und die erste Betriebsart des Reinigungsbetriebs bei Überschreiten eines vorgebbaren ersten oberen Druckschwellenwerts aktiviert wird und die zweite Betriebsart des Reinigungsbetriebs bei Überschreiten eines vorgebbaren zweiten oberen Druckschwellenwerts aktiviert wird, wobei der zweite obere Druckschwellenwert höher als der erste obere Druckschwellenwert ist.

10. Verfahren nach Anspruch 8 oder 9 und einem oder mehreren der Ansprüche 5 bis 7,
**dadurch gekennzeichnet, dass**
auf einen Reinigungsbetrieb der zweiten Betriebsart ein Reinigungsbetrieb der ersten Betriebsart folgt.

## Claims

1. Method for the operation of a reducing agent supply system for the supply of an exhaust treatment apparatus of a motor vehicle with a reducing agent for exhaust emission control, wherein an air stream and a reducing agent stream are supplied to a nozzle device opening into an exhaust pipe,
**characterised in that**
- in a normal metering operation of the reducing agent supply system (1), an at least approximately continuous air stream and a pulsed reducing agent stream are generated and at least partially fed into the exhaust pipe via the nozzle device, and
- in a cleaning operation for cleaning the reducing agent supply system (1), an air stream formed from a number of air stream pulses (20) and a reducing agent stream formed from an number of reducing agent stream pulses (21) are generated and fed to the nozzle device.

2. Method according to claim 1,
**characterised in that**
a back pressure is determined in a line of the reducing agent supply system (1) for conveying the air stream to the nozzle device and the cleaning operation is activated if a presettable, in particular first, upper pressure threshold value is exceeded.

3. Method according to claim 1 or 2,
**characterised in that**
a back pressure is determined in a line of the reducing agent supply system (1) for conveying the air stream to the nozzle device and an activated cleaning operation is deactivated if the back pressure falls below a presettable lower threshold value.

4. Method according to claim 1 or 2,
**characterised in that**
an activated cleaning operation is deactivated if a presettable total value of reducing agent quantity of the reducing agent stream formed from reducing agent stream pulses (21) is exceeded or if a presettable period of time is exceeded since the start of the cleaning operation.

5. Method according to any of claims 1 to 4,
**characterised in that**
for the cleaning operation, an in particular first operating mode is provided, in which a sequence of reducing agent stream pulses (21) and air stream pulses (20) is generated in such a way that a respective reducing agent stream pulse (21) chronologically overlaps with a respective air stream pulse (20).

6. Method according to claim 5,
**characterised in that**
a positive- and/or negative going slope (24; 25) of a reducing agent stream pulse (21) chronologically falls within an air stream pulse (20).

7. Method according to claim 5,
**characterised in that**
an air stream pulse (20) chronologically falls completely within a reducing agent stream pulse (21).

8. Method according to any of claims 1 to 7,
**characterised in that**
for the cleaning operation, an in particular second operating mode is provided, in which, if the air stream is cut off, a number of consecutive reducing agent stream pulses (21) is generated and, if the reducing agent stream is cut off, a number of consecutive an air stream pulses (20) is generated.

9. Method according to claim 8 and one or more of claims 5 to 7,
**characterised in that**
a back pressure is determined in a line of the reducing agent supply system (1) for conveying the air stream to the nozzle device and the first operating mode of the cleaning operation is activated if a presettable first upper pressure threshold value is exceeded and the second operating mode of the cleaning operation is activated if a presettable second upper pressure threshold value is exceeded, the second upper pressure threshold value being higher than the first upper pressure threshold value.

10. Method according to claim 8 or 9 and one or more of claims 5 to 7,
**characterised in that**
a cleaning operation of the second operating mode is followed by a cleaning operation of the first operating mode.

## Revendications

1. Procédé de fonctionnement d'un système d'alimentation en agent de réduction destiné à un dispositif de retraitement de gaz d'échappement d'un véhicule automobile doté d'un agent de réduction servant au système d'épuration de gaz d'échappement, un flux d'air et un flux d'agent de réduction étant amenés dans un dispositif éjecteur s'ouvrant dans une conduite de gaz d'échappement, **caractérisé en ce que** lors d'un fonctionnement de dosage normal du système d'alimentation en agent de réduction (1) un flux d'air au moins approximativement continu et un flux d'agent de réduction pulsé sont générés et délivrés au moins en partie par le dispositif injecteur dans la conduite de gaz d'échappement, et lors d'un fonctionnement de nettoyage destiné au nettoyage du système d'alimentation en agent de réduction (1), un flux d'air formé par un certain nombre d'impulsions de flux d'air (20) et un flux d'agent de réduction formé par un certain nombre d'impulsions d'agent de réduction (21) sont générés et acheminés jusqu'au dispositif injecteur.

2. Procédé selon la revendication 1, **caractérisé en ce qu'**une pression dynamique destinée au transport du flux d'air vers le dispositif éjecteur est déterminée dans une conduite du système d'alimentation en agent de réduction (1) et **en ce que** le fonctionnement de nettoyage est activé en cas de dépassement d'une première valeur seuil supérieure de pression déterminée.

3. Procédé selon la revendication 1 ou la revendication 2, **caractérisé en ce qu'**une pression dynamique destinée au transport du flux d'air vers le dispositif éjecteur est déterminée dans une conduite du système d'alimentation en agent de réduction (1) et **en ce qu'**un fonctionnement de nettoyage activé est désactivé en cas de sous-dépassement d'une valeur seuil inférieure de pression déterminée.

4. Procédé selon la revendication 1 ou la revendication 2, **caractérisé en ce qu'**un fonctionnement de nettoyage activé est désactivé après le dépassement d'une valeur totale de quantité d'agent de réduction déterminée du flux d'agent de réduction formé à partir d'impulsions de flux d'agent de réduction (21) ou après le dépassement d'une durée déterminée à partir du début du fonctionnement de nettoyage.

5. Procédé selon l'une quelconque des revendications précédentes 1 à 4, **caractérisé en ce que** pour le fonctionnement de nettoyage il est prévu notamment un premier type de fonctionnement, selon lequel une séquence d'impulsions de flux d'agent de réduction (21) et d'impulsions de flux d'air (20) est générée de manière que chaque impulsion de flux d'agent de réduction (21) et chaque impulsion de flux d'air (20) se chevauchent dans le temps.

6. Procédé selon la revendication 5, **caractérisé en ce qu'**un flanc d'impulsion (24, 25) décroissant et/ou croissant d'une impulsion de flux d'agent de réduction (21) décroît dans le temps dans une impulsion de flux d'air (20).

7. Procédé selon la revendication 5, **caractérisé en ce qu'**une impulsion de flux d'air (20) décroît entièrement dans l'impulsion de flux d'agent de réduction (21) dans le temps.

8. Procédé selon l'une quelconque des revendications précédentes 1 à 7, **caractérisé en ce que** pour le fonctionnement de nettoyage il est prévu notamment un second type de fonctionnement, selon lequel lors de l'arrêt du flux d'air un certain nombre d'impulsions de flux d'agent de réduction (21) successives et lors de l'arrêt du flux d'agent de réduction un certain nombre d'impulsions de flux d'air (20) successives sont générées.

9. Procédé selon la revendication 8 et selon l'une ou plusieurs revendications parmi les revendications 5 à 7, **caractérisé en ce qu'**une pression dynamique destinée au transport du flux d'air vers le dispositif éjecteur est déterminée dans une conduite du système d'alimentation en agent de réduction (1) et **en ce que** le premier type de fonctionnement de nettoyage est activé en cas de dépassement d'une première valeur seuil supérieure de pression déterminée et **en ce que** le second type de fonctionnement de nettoyage est activé en cas de dépassement d'une seconde valeur seuil de pression supérieure déterminée, la seconde valeur seuil supérieure de pression est supérieure à la première valeur seuil supérieure de pression.

10. Procédé selon la revendication 8 ou la revendication 9 et selon l'une ou plusieurs revendications parmi les revendications 5 à 7, **caractérisé en ce qu'**un fonctionnement de nettoyage du premier type suit un fonctionnement de nettoyage du second type.
